Europäisches Patentamt

European Patent Office

Office européen des brevets

(19)

(11) Veröffentlichungsnummer: **0 174 521 B1**

(12) **EUROPÄISCHE PATENTSCHRIFT**

(45) Veröffentlichungstag der Patentschrift:
07.01.88

(51) Int. Cl.⁴: **B 60 S 1/52**

(21) Anmeldenummer: 85110404.2

(22) Anmeldetag: 20.08.85

(54) Spritzdüsenkopf.

(30) Priorität: 08.09.84 DE 3433091

(43) Veröffentlichungstag der Anmeldung:
19.03.86 Patentblatt 86/12

(45) Bekanntmachung des Hinweises auf die Patenterteilung:
07.01.88 Patentblatt 88/1

(84) Benannte Vertragsstaaten:
DE FR GB IT

(56) Entgegenhaltungen:
EP - A - 0 123 103
DE - A - 1 901 407
DE - A - 2 525 549
US - A - 4 212 425

(73) Patentinhaber: VDO Adolf Schindling AG,
Gräfstrasse 103, D-6000 Frankfurt/Main (DE)

(72) Erfinder: Sieber, Roland, Unter der Schanze 21,
D-6442 Rodenburg (DE)
Erfinder: Kohlhaas, Helmut, Kupferstrasse 25,
D-6444 Wildeck 4 (DE)
Erfinder: Hoppe, Helmut, Alleestrasse 1,
D-6440 Bebra-Weiterrode (DE)
Erfinder: Vollrath, Johannes, Eduard-Hirsch-Strasse 51,
D-7107 Neckarsulm (DE)
Erfinder: Pasch, Erich, Scheffelstrasse 15,
D-7107 Neckarsulm (DE)

(74) Vertreter: Klein, Thomas, Dipl.-Ing. (FH), Sodener
Strasse 9 Postfach 6140, D-6231 Schwalbach a. Ts. (DE)

ACTORUM AG

## Beschreibung

Die Erfindung bezieht sich auf einen Spritzdüsenkopf mit zumindest einer Spritzdüse und einer elektrischen Heizung. Ein solcher Spritzdüsenkopf ist beispielsweise in der DE-B-2 434 491 beschrieben und kann Teil einer Scheibenwaschanlage oder einer Scheinwerferwaschanlage sein.

Die elektrische Beheizung des Spritzdüsenkopfes ist sinnvoll, da erfahrungsgemäss Spritzdüsenköpfe im Winter zum Einfrieren neigen und die Scheibenwaschanlage oder Scheinwerferwaschanlage dadurch unbrauchbar wird. Um zu erreichen, dass nach dem Einschalten der Scheibenwaschanlage unverzüglich Wasser aus den Spritzdüsen spritzt, muss durch ein Rückschlagventil in der Wasserzuführleitung sichergestellt werden, dass bei nicht benutzter Scheibenwaschanlage die Wasserzuführleitung nicht leerlaufen kann. Deshalb ordnet man bei Scheibenwaschanlagen dort, wo sich die Wasserzuführleitung zu den einzelnen Spritzdüsenköpfen verzweigt, ein Rückschlagventil an. Bei Scheinwerferwaschanlagen muss ein Rückschlagventil unmittelbar vor der Spritzdüse vorgesehen werden, weil diese tiefer liegt als der Wasservorratsbehälter und ohne Rückschlagventil der Wasservorratsbehälter nach einer Betätigung der Scheinwerferwaschanlage von selbst leerlaufen würde.

Die Rückschlagventile von Scheinwerferwaschanlagen oder Scheibenwaschanlagen neigen ebenfalls zum Einfrieren, so dass allein durch Beheizen des Spritzdüsenkopfes eine solche Waschanlage nicht funktionsfähig zu halten ist.

Der Erfindung liegt die Aufgabe zugrunde, einen Spritzdüsenkopf der eingangs genannten Art derart zu gestalten, dass die Waschanlage, für die er vorgesehen ist, mit möglichst einfachen Mitteln auch bei Minustemperaturen funktionsfähig bleibt.

Diese Aufgabe wird erfindungsgemäss dadurch gelöst, dass zusätzlich ein zur Spritzdüse hin öffnendes Rückschlagventil vorgesehen ist, das Verbindung mit einem Wärmeleitblock hat, gegen den ein Heizelement der elektrischen Heizung anliegt und der gleichzeitig zur Erwärmung der Spritzdüse ausgebildet ist.

Durch die erfindungsgemässe Anordnung des Rückschlagventils im Spritzdüsenkopf und durch die Beheizung dieses Rückschlagventils wird ein Einfrieren des Rückschlagventils ebenso zuverlässig verhindert wie ein Einfrieren der Spritzdüse. Hiervon abgesehen, ist die Gesamtanordnung kostengünstig, da kein separates Rückschlagventil in die Wasserzuführleitung eingebaut werden muss.

Im Spritzdüsenkopf genügt somit die Anordnung einer einzigen Heizung. Die Wärme dieser Heizung wird von dem Wärmeleitblock sowohl dem Rückschlagventil als auch der Spritzdüse zugeführt.

Eine andere, vorteilhafte Ausgestaltung der Erfindung besteht darin, dass das Rückschlagventil ein mittels einer Metallfeder in Schliessstellung vorgespanntes Klappenventil ist und dass die Metallfeder gegen den Wärmeleitblock anliegt. Bei dieser Ausführungsform leitet die Metallfeder die Wärme vom Wärmeleitblock zur Ventilklappe.

Besonders gut wird die Wärme zur Ventilklappe geleitet, wenn die Metallfeder eine auf der Ventilklappe aufliegende, mit einem Ende zwischen dem Wärmeleitblock und der Ventilklappe eingespannte Blattfeder ist.

Die elektrische Heizung ist am einfachsten dadurch gebildet, dass das Heizelement ein von einer Schraubendruckfeder in Anlage gegen den Wärmeleitblock gehaltenes PTC-Element ist.

Konstruktiv günstig ist es, wenn die Spannungszufuhr des PTC-Elementes über die Schraubendruckfeder erfolgt.

Im Regelfall wird der Spritzdüsenkopf von einem Kunststoffteil umkleidet sein, so dass er auch im montierten Zustand keine Verbindung mit der Fahrzeugmasse hat. Der Stromfluss durch das PTC-Element kann dann auf einfache Weise ermöglicht werden, indem der Wärmeleitblock über eine zweite Schraubendruckfeder mit dem anderen Spannungspol Verbindung hat.

Eine weitere, vorteilhafte Ausführungsform der Erfindung besteht darin, dass der Wärmeleitblock einen Teil der Leitung für die Wasserzufuhr zur Spritzdüse bildet und bis nahe zur Spritzdüse reicht. Bei dieser Ausführungsform gelangt genügend Wärme durch die im Spritzdüsenkopf vorhandene Flüssigkeit und teilweise auch durch das Material des Spritzdüsenkopfs zur Spritzdüse, so dass auch ein rasches Auftauen einer während eines Fahrzeugstillstandes eingefrorenen Spritzdüse gewährleistet ist.

Bei einer wahlweisen Zufuhr von zwei verschiedenen Flüssigkeiten zum Spritzdüsenkopf hat man bisher die einzelnen Zufuhrleitungen schon an einer relativ weit vom Spritzdüsenkopf entfernten Stelle vereinigt und dort das Rückschlagventil angeordnet (DE-A-3 015 348), so dass die eingangs genannten Nachteile eintreten. Mit verhältnismässig geringem Aufwand lassen sich auch bei einer solchen Zufuhr zweier Flüssigkeiten diese Nachteile vermeiden, wenn der Spritzdüsenkopf zur getrennten Zufuhr zweier Flüssigkeiten ausgebildet und in beiden Flüssigkeitszuleitungen jeweils ein gegen den Wärmeleitblock anliegendes Rückschlagventil vorgesehen ist.

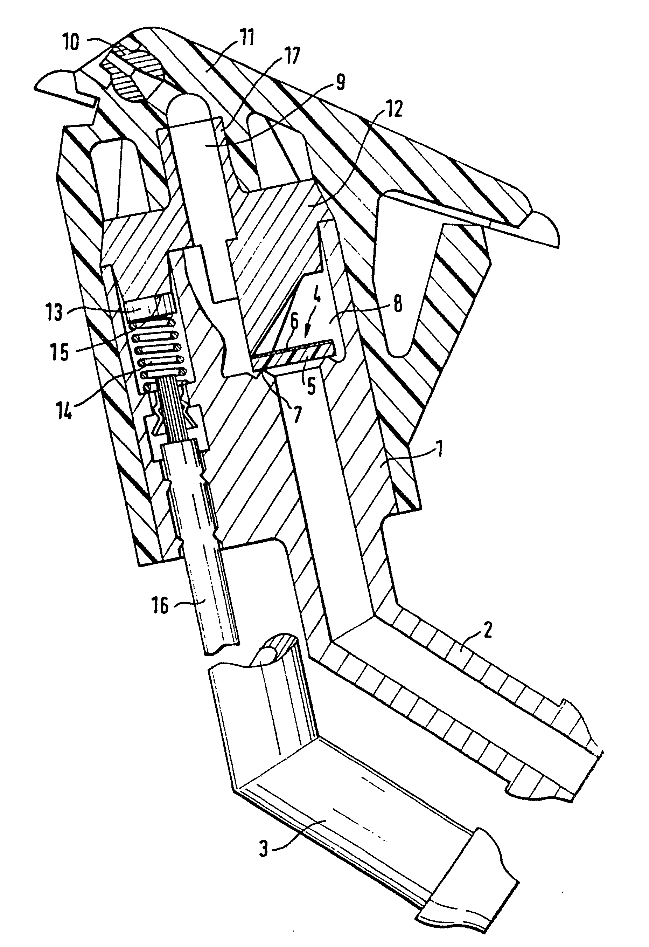

Die Erfindung lässt zahlreiche Ausführungsformen zu. Zur Verdeutlichung ihres Grundprinzips ist eine davon in der Zeichnung dargestellt und wird nachfolgend beschrieben. Die Zeichnung zeigt einen Längsschnitt durch einen erfindungsgemäss gestalteten Spritzdüsenkopf.

Die Zeichnung zeigt einen Düsenkörper 1 aus beispielsweise Aluminium, der nach unten hin zwei Anschlussstutzen 2, 3 hat. Über diese Anschlussstutzen 2, 3 können nicht gezeigte Schläuche geschoben werden, durch die der Spritzdüsenkopf Verbindung mit zwei ebenfalls nicht gezeigten Behältern erhält. Für den Anschlussstutzen 3 ist nicht gezeigt, wie dieser mit dem Düsenkörper 1 Verbindung hat und wie von ihm im Spritzdüsenkopf die Flüssigkeitsführung erfolgt, da die Verhältnisse genau wie bei dem anderen Anschlussstutzen 2 sind.

Vom Anschlussstutzen 2 vermag Flüssigkeit durch den Düsenkörper 1 hindurch zu einem Rückschlagventil 4 zu gelangen, welches eine Ventilklappe 5 hat, die von einer Blattfeder 6 in Schliessstellung gegen einen Ventilsitz 7 gehalten ist. Öffnet die Ventilklappe 5, so vermag Flüssigkeit in einen Raum 8 und von dort durch eine Zuführleitung 9 hindurch zu einer Spritzdüse 10 zu gelangen, aus der heraus die Flüssigkeit beispielsweise gegen eine Windschutzscheibe spritzt.

Die Spritzdüse ist ihrerseits in einer Kunststoffkappe 11 gehalten, die über den Düsenkörper 1 geschoben ist. Um ein Einfrieren der Gesamtanordnung vermeiden zu können, ist innerhalb des Spritzdüsenkopfes ein Wärmeleitblock 12 vorgesehen, gegen den ein PTC-Element 13 dadurch anliegt, dass eine Schraubendruckfeder 14 dieses PTC-Element gegen eine Fläche 15 des Wärmeleitblocks 12 drückt. Die Spannungszufuhr zum PTC-Element erfolgt mittels eines Kabels 16 und anschliessend über die Schraubendruckfeder 14. Auch der andere Spannungspol kann über eine gleiche, nicht dargestellte Schraubendruckfeder Verbindung mit dem Wärmeleitblock 12 haben.

Die Zeichnung lässt erkennen, dass die Zuführleitung 9 durch einen Teil des Wärmeleitblocks 12 gebildet ist und der Wärmeleitblock 12 mit einem nach oben gerichteten Fortsatz 17 bis nahe zur Spritzdüse 10 reicht. Dadurch wird die Wärme vom PTC-Element 13 bis nahe zur Spritzdüse 10 geführt. Die Aufheizung des Rückschlagventils 4 erfolgt dadurch, dass die Blattfeder 6 auf der Ventilklappe 5 aufliegt und zwischen Ventilklappe 5 und dem Wärmeleitblock 12 eingespannt ist, so dass sie die Wärme aus dem Wärmeleitblock 12 zur Ventilklappe 5 zu leiten vermag.

Für den Anschlussstutzen 3 kann ein dem Rückschlagventil 4 entsprechendes Rückschlagventil im Spritzdüsenkörper vorgesehen sein, welches ebenfalls über den Wärmeleitblock 12 beheizbar ist.

### Patentansprüche

1. Spritzdüsenkopf mit zumindest einer Spritzdüse und einer elektrischen Heizung, dadurch gekennzeichnet, dass zusätzlich ein zur Spritzdüse (10) hin öffnendes Rückschlagventil (4) vorgesehen ist, das Verbindung mit einem Wärmeleitblock (12) hat, gegen den ein Heizelement (PTC-Element 13) der elektrischen Heizung anliegt und der gleichzeitig zur Erwärmung der Spritzdüse (10) ausgebildet ist.

2. Spritzdüsenkopf nach Anspruch 1 oder einem der folgenden, dadurch gekennzeichnet, dass das Rückschlagventil (4) eine mittels einer Metallfeder (Blattfeder 6) in Schliessstellung vorgespannte Ventilklappe (5) hat und dass die Metallfeder gegen den Wärmeleitblock (12) anliegt.

3. Spritzdüsenkopf nach Anspruch 1 oder einem der folgenden, dadurch gekennzeichnet, dass die Metallfeder eine auf der Ventilklappe (5) aufliegende, mit einem Ende zwischen dem Wärmeleitblock (12) und der Ventilklappe (5) eingespannte Blattfeder (6) ist.

4. Spritzdüsenkopf nach Anspruch 1 oder einem der folgenden, dadurch gekennzeichnet, dass das Heizelement ein von einer Schraubendruckfeder (14) in Anlage gegen den Wärmeleitblock (12) gehaltenes PTC-Element (13) ist.

5. Spritzdüsenkopf nach Anspruch 1 oder einem der folgenden, dadurch gekennzeichnet, dass die Spannungszufuhr des PTC-Elementes (13) über die Schraubendruckfeder (14) erfolgt.

6. Spritzdüsenkopf nach Anspruch 1 oder einem der folgenden, dadurch gekennzeichnet, dass der Wärmeleitblock (12) über eine zweite Schraubendruckfeder mit dem anderen Spannungspol Verbindung hat.

7. Spritzdüsenkopf nach Anspruch 1 oder einem der folgenden, dadurch gekennzeichnet, dass der Wärmeleitblock (12) einen Teil der Rohrleitung für die Wasserzufuhr zur Spritzdüse (10) bildet und bis nahe zur Spritzdüse (10) reicht.

8. Spritzdüsenkopf nach Anspruch 1 oder einem der folgenden, dadurch gekennzeichnet, dass er zur getrennten Zufuhr zweier Flüssigkeiten ausgebildet und in beiden Flüssigkeitszuleitungen jeweils ein gegen den Wärmeleitblock (12) anliegendes Rückschlagventil (4) vorgesehen ist.

### Claims

1. Spraying nozzle head with at least one spraying nozzle and with an electrical heating arrangement, characterised in that there is additionally provided a non-return valve (4) opening towards the spraying nozzle (10) and connected with a heat conduction block (12) against which block there abuts a heating element (PTC element 13) of the electrical heating arrangement, said block at the same time being constructed for heating the spraying nozzle (10).

2. Spraying nozzle head according to claim 1 or one of the following claims, characterised in that the non-return valve (4) has a valve flap (5) preloaded by means of a metal spring (plate spring 6) into the closing position, and that the metal spring abuts against the heat conduction block (12).

3. Spraying nozzle head according to claim 1 or one of the following claims, characterised in that the metal spring is a plate spring (6) which bears on the valve flap (5) and is secured at one end between the heat conduction block (12) and the valve flap (5).

4. Spraying nozzle head according to claim 1 or one of the following claims, characterised in that the heating element is a PTC element (13) which is held in abutment against the heat conduction block (12) by a helical compression spring (14).

5. Spraying nozzle head according to claim 1 or one of the following claims, characterised in that the voltage supply to the PTC element (13) is effected through the helical compression spring (14).

6. Spraying nozzle head according to claim 1 or one of the following claims, characterised in that the heat conduction block (12) is connected with the other potential pole via a second helical compression spring.

7. Spraying nozzle head according to claim 1 or one of the following claims, characterised in that the heat conduction block (12) forms a part of the conduit for the supply of water to the spraying nozzle (10), and extends into the vicinity of the spraying nozzle (10).

8. Spraying nozzle head according to claim 1 or one of the following claims, characterised in that it is constructed for the separate supply of two liquids, and a non-return valve (4) abutting against the heat conduction block (12) is provided in each of the two liquid supply conduits.

**Revendications**

1. Tête de gicleur comportant au moins un gicleur et un chauffage électrique, caractérisée par le fait que l'on prévoit, en plus, une valve anti-retour (4) ouvrant vers le gicleur (10), qui communique avec un bloc (12) conducteur de chaleur contre lequel s'appuie un élément chauffant, l'élément CPT (13), faissant partie du circuit du chauffage électrique, et qui est en même temps conformé pour le réchauffage du gicleur (10).

2. Tête de gicleur selon la revendication 1, caractérisée en ce que la valve anti-retour (4) possède un clapet (5) pré-tendu, au moyen d'un ressort en métal (ressort à lame 6) en position de fermeture et en ce que le ressort en métal s'appuie sur le bloc (12) conducteur de chaleur.

3. Tête de gicleur selon la revendication 1 ou 2, caractérisée en ce que le ressort de métal est un ressort à lame (6) qui repose sur le clapet (5) et est encastré par une extrémité entre le bloc (12) conducteur de chaleur et le clapet (5).

4. Tête de gicleur selon la revendication 1 ou l'une des revendications suivantes, caractérisée en ce que l'élément chauffant est un élément (13) CPT (à coefficient positif de température) maintenu par un ressort hélicoïdal (14) de compression en appui contre le bloc (12) conducteur de chaleur.

5. Tête de gicleur selon la revendication 1 ou l'une des revendications suivantes, caractérisée en ce que l'alimentation en tension de l'élément (13) CPT se fait par le ressort hélicoïdal (14) de compression.

6. Tête de gicleur selon la revendication 1 ou l'une des revendications suivantes, caractérisée en ce que le bloc (12) conducteur de chaleur est relié par un second ressort hélicoïdal de compression à l'autre pôle de tension électrique.

7. Tête de gicleur selon la revendication 1 ou l'une des revendications suivantes, caractérisée en ce que le bloc (12) conducteur de chaleur constitue une partie du conduit en forme de tuyau pour l'alimentation en eau de gicleur (10), et arrive à proximité de ce gicleur (10).

8. Tête de gicleur selon la revendication 1 ou l'une des revendication suivantes, caractérisée en ce qu'elle est conformée pour acheminer séparément deux liquides et en ce que, dans chacun des deux conduits d'alimentation en liquide, est prévue une valve anti-retour (4) appuyée contre le bloc (12) conducteur de chaleur.